# EUROPEAN PATENT APPLICATION

(11) **EP 3 285 405 A1**
(43) Date of publication of application: **21.02.2018**
(21) Application number: 17180626.8
(22) Date of filing: 11.07.2017
(51) Int. Cl.: H04B 1/3827, H01Q 1/24, H04B 7/155, H04B 7/26, H04W 52/36

(54) **A DEVICE AND METHOD FOR RELOCATING HARMFUL RADIATION OF A CELLULAR MOBILE DEVICE TO A BASE DEVICE**

(30) Priority: 16.08.2016 US 201662375460 P
(71) Applicant: L&C Business Group Inc., Road Town (VG)
(72) Inventor: KHANUKAEV, Oleg, Netanya (IL); GROMOV, Gleb, Ramat Gan (IL); ABESGAUS, Michael, Tel-Aviv (IL)
(74) Representative: Kancelaria Eupatent.pl Sp. z.o.o

(57) **Abstract**

A method, device and system for relocating electromagnetic radiation from a primary device to a base device, the method including: connecting the primary device to the base device over an auxiliary wireless connection; communicating subscriber identification module (SIM) information from a SIM card installed in the primary device to the base device via the auxiliary wireless connection; sending outgoing wireless transmissions from the primary device to the base device via the auxiliary wireless connection and sending the outgoing wireless transmissions from the base device to a network base station via a wireless network communication medium; and receiving incoming wireless transmissions from the network base station at the base device via the wireless network communication medium and communicating the incoming wireless transmissions to the primary device via the auxiliary wireless connection.

## Description

### FIELD OF THE INVENTION

The present invention relates to a device and method for protecting against harmful radiation from cell phones and, more particularly, to a device and method for relocating harmful radiation of a cellular mobile device to a secondary / base device.

### BACKGROUND OF THE INVENTION

Various devices, covers, peripheral accessories and the like are known in the art for redirecting or minimizing cell phone radiation from the ubiquitous devices.

### SUMMARY OF THE INVENTION

According to the present invention there is provided a method for relocating electromagnetic radiation from a primary device to a base device, the method including: connecting the primary device to the base device over an auxiliary wireless connection; communicating subscriber identification module (SIM) information from a SIM card installed in the primary device to the base device via the auxiliary wireless connection; sending outgoing wireless transmissions from the primary device to the base device via the auxiliary wireless connection and sending the outgoing wireless transmissions from the base device to a network base station via a wireless network communication medium; and receiving incoming wireless transmissions from the network base station at the base device via the wireless network communication medium and communicating the incoming wireless transmissions to the primary device via the auxiliary wireless connection.

According to further features in preferred embodiments of the invention described below the method further includes the step of deactivating a wireless network transceiver of the primary device after connecting the primary device to the base device.

According to still further features in the described preferred embodiments the auxiliary wireless connection includes transmissions between an auxiliary wireless transceiver of the primary device and an auxiliary wireless transceiver of the base device.

According to still further features the auxiliary wireless connection is effected by at least one wireless communication medium selected from the group comprising: Bluetooth, Near Field Communication (NFC), WiFi.

According to still further features the SIM information is communicated over a first wireless communication medium and the outgoing and incoming transmissions between the primary device and the base device are communicated over a second wireless communication medium.

According to still further features the wireless communication medium is dynamically selected between communication sessions or even during a communication session.

According to another embodiment there is provided a method for relocating electromagnetic radiation from a primary device to a base device, the method including: connecting the primary device to the base device via corresponding auxiliary wireless communication media on each of the devices; communicating subscriber identification module (SIM) information from a SIM card installed in the primary device to the base device via the auxiliary wireless communication media; sending outgoing wireless transmissions from the primary device to the base device via the auxiliary wireless communication media and sending the outgoing wireless transmissions from the base device to a public switched telephone network (PSTN) via a network communication medium; and receiving incoming transmissions from the PSTN at the base device via the network communication medium and wirelessly communicating the incoming transmissions to the primary device via the auxiliary wireless connection.

According to still further features the base device is a wireless router. According to still further features the network communication medium is a land-based medium or a wireless medium.

According to still further features the primary device is a mobile cellular communication device.

According to another embodiment there is provided a mobile device including: a wireless network communication transceiver; at least one auxiliary wireless communication transceiver; a processing unit; and
a non-transient computer readable medium having stored thereon instructions executable by the processing unit the instructions being configured to cause the processing unit, upon execution thereof, to: establish a wireless connection with a primary device using the at least one auxiliary wireless communication transceiver; fetch subscriber identification module (SIM) information over the wireless connection from a SIM card installed in the primary device; receive outgoing wireless transmissions from the primary device via the wireless connection; send the outgoing wireless transmissions to a network base station via the wireless network communication transceiver; receive incoming wireless transmissions from the network base station via the wireless network communication transceiver; and communicate the incoming wireless transmissions to the primary device via the wireless connection.

According to still further features the at least one auxiliary wireless transceiver includes two auxiliary wireless transceivers.

According to still further features the SIM information is fetched via a first auxiliary wireless transceiver and the incoming and outgoing transmissions are communicated via a second auxiliary wireless transceiver.

The present invention successfully addresses the shortcomings of the presently known configurations by providing a device and method for relocating the most severe and dangerous radiation to a secondary/base device, which is spaced apart from the user, and specifically from the user's head, especially when talking on the device.

For example, today, the most dangerous radiation is understood to come from the GSM antenna in the device. "...one study of past cell phone use (up to the year 2004), showed a 40% increased risk for gliomas [ed. a malignant type of brain cancer] in the highest category of heavy users (reported average: 30 minutes per day over a 10-year period)." World Health Organization/International Agency for Research on Cancer (IARC), press release number 208. http://www.iarc.fr/en/mediacentre/pr/2011/pdfs/pr208_E.pdf

To neutralize smartphone's GSM antenna activity, the present device and method relocates the GSM antenna's emission to an external device (labeled "R-SAFER" in the figures below - "R" being a reference to RF or radio frequency safety device) without moving or removing the SIM (Subscriber Identity Module) card from the primary cell phone. The local GSM antenna on the primary device is deactivated and the external device accesses the cellular network using primary device's SIM card information.

The secondary device (also referred to herein as a "base device" or "BD") connects to the SIM card in the primary device over Bluetooth or WiFi wireless communications channel. These communication protocols and antennas output much less radiation. For example, the World Health Organization (WHO) reports "There is no risk from low level, long-term exposure to Wi-Fi networks". United Kingdom's Health Protection Agency reports that exposure to Wi-Fi for a year results in the "same amount of radiation from a 20-minute mobile phone call [ed. GSM use]."

### BRIEF DESCRIPTION OF THE DRAWINGS

Various embodiments are herein described, by way of example only, with reference to the accompanying drawings, wherein:
FIG. 1 is a diagram of one embodiment of the system of the invention in an active state;
FIG. 2A is a high-level block diagram of the primary device of FIG. 1;
FIG. 2B is a high-level block diagram of the base device of FIG. 1;
FIG. 3 is a flow diagram of the method steps of the invention;
FIG. 4 is a schematic depiction of an exemplary software application on the primary device;
FIG. 5 is a schematic depiction of an exemplary software application on the base device.

### DESCRIPTION OF THE PREFERRED EMBODIMENTS

The principles and operation of a device and method for relocating the harmful radiation of a mobile cellular device to a base device, according to the present invention, may be better understood with reference to the drawings and the accompanying description.

Some of the terms used herein have specific meanings in different contexts. Other terms have been either borrowed or generalized, such that the use of the terms may be misleading when taken out of context or without clarification. The following terms and clarifications are therefore provided, so as to mitigate the inherent ambiguity of these terms.

The primary device (PD) referred to herein is a mobile communications device that effects communication over the cellular network. Cell phones, smartphones and other devices with cellular connectivity communicate with the cellular network via an integrated antenna. The terms GSM (Global System for Mobile Communications) and GSM antenna are borrowed terms from the most prevalent wireless communications network protocol currently in use. The term includes all the antennas and technologies used for cellular mobile communication.

Therefore, as used herein, the term "GSM antenna" refers to the wireless cellular network antenna that primarily sends and receives signals to/from cell towers to facilitate, at least, wireless voice communication over the cellular network. Unless stated otherwise, the term also includes wireless data communication as well as satellite communication. The term may be used interchangeably with the general terms "network antenna", "primary network antenna" and/or "wireless network antenna". Although the an antenna is an electrical device which converts electric power into radio waves, and vice versa, the term "antenna" is used herein to include all the hardware needed for the function of the antenna, for example, transmitters, receivers, transceivers etc.

The term "GSM" is used in a similar manner to generally refer to a wireless cellular network. The term is used interchangeably with terms such as "wireless cellular network", "wireless network", "cellular network", "primary wireless network" and variations thereof.

It is made clear that although the primary communication medium is discussed herein as originating from the GSM antenna, this is merely exemplary (albeit based on current data in the field). It is made clear than any other wireless communication medium that is selected (e.g. if another antenna is found to be more harmful), the same method and device can be configured to relocate the harmful radiation from *that* antenna instead of the GSM antenna.

Furthermore, it is made clear that Bluetooth and/or WiFi communication channels are also merely exemplary protocols that have been chosen as preferred secondary / auxiliary communication channels (although this is also based on the current data in the field) and may likewise be substituted for other wireless communication mediums between the primary and secondary/base devices.

The communication medium may be sound waves, electromagnetic energy such as radio waves, light waves and the like. An example of the LAWC technology is Bluetooth™ (BT), but it is understood that the use of Bluetooth technology herein is merely exemplary and that other communication technologies such as, but not limited to, NFC, WiFi and others may be employed in place of Bluetooth.

"Displacement", "relocation", "transference" (e.g. of a primary wireless network signal) and similar terms are used herein to refer to the method whereby a wireless network signal which would in normal circumstances radiate from one location will instead radiate from a different location. For example, a primary wireless network signal that usually radiates from a primary device (e.g. personal cell phone) is relocated to a secondary device (base device) so that the primary wireless network signal now radiates from the secondary device not the primary device.

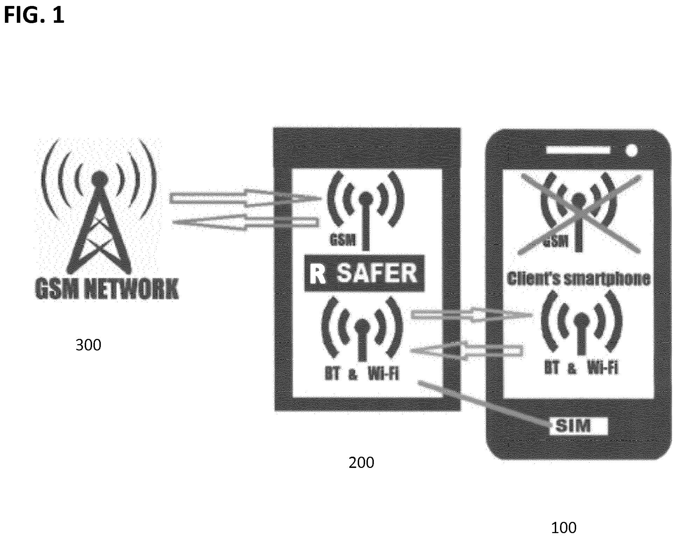

Referring now to the drawings, Figure 1 illustrates a primary device 100 and a base device 200 with the base device in an active state. The base device is connected the to the client's smartphone 100, which is referred to herein as the primary device, the GSM antenna of the primary device is turned off. The client's smartphone fully retains its functionality, and still accesses the GSM network, but this is now done via the base device, and the smartphone communicates with the base device via Bluetooth, WiFi or some similar wireless communication. Obviously, the communication between the primary device and the base device is two-way communication.

In normal circumstances (i.e. when the primary device is not connected to the base device), the local GSM antenna in the primary device (e.g. user's cell phone) broadcasts to, and receives a signal from, the GSM tower (cellular base station). The GSM tower (network) consistently queries the device for the SIM information, at periodic intervals. The GSM antenna is in contact with the SIM card to provide the subscriber identification data stored on the SIM. When the base device is activated and connected to the primary device, the GSM antenna of the base device emulates, and thus replaces, the activities of the GSM antenna of the client's smartphone (primary device). The GSM antenna in the primary device is switched off. The base device connects to the client's smartphone via a Bluetooth or Wi-Fi connection (or other wireless communication means).

The base device registers within the GSM network under the "subscriber name" or identification of the client's smartphone SIM card. Just like the local GSM antenna is able to fetch the identification information from the SIM (albeit via a wired connection), so too the base device is able to remotely fetch the identification information from the SIM card in the primary device via a wireless connection (e.g. using the rSAP Bluetooth protocol.). The base device then receives the audio or data signal from the GSM tower and relays the signal via Bluetooth or Wi-Fi back to the primary device. The user receives voice and communication data (text messages, emails etc.) in a regular manner on the primary device and any new media data (e.g. voice, SMS, Internet access, etc.) originating at the primary device is transmitted to based device and from the based device to the cellular network (voice or data).

In the depicted embodiment of FIG. 1, the base device is a standalone, portable device. However, this depiction is merely exemplary and it is made clear that a standalone base device can come in any practical form. For example, the BD may be handheld device or a wearable device, a keychain fob, a device integrated or inserted into a piece of clothing such as a shoe, an accessory such as a carrying case for the primary device that can be mounted on the user's belt (also referred to as a holster) and the like.

The primary function of the BD is to displace the high level of radiation that is emitted from the handset of the primary device (e.g. during an active call) away from the ear and skull of the user. Therefore, if the radiation is relocated, for example, to the waist, pant pocket, shoe, handbag etc., then the high concentration of radiation does not damage the head and brain. Specific Absorption Rate (SAR) is a measure of the rate at which energy is absorbed by the human body when exposed to a radio frequency (RF) electromagnetic field. The absorption rate is reduced exponentially by providing even a small amount of distance between the source of radiation and the endangered body part (e.g. the head).

In another embodiment, the base device can be integrated / incorporated into a Wireless Router or similar device. For example a household wireless router can be modified to include the base device components and functionality. When a member of the house (or a guest for that matter) enters into the range of the WiFi router, their primary device GSM (or other - see above) antenna is switched off and the GSM functionality is transferred to the wireless router which is now the base device. The voice and data communications are transferred between the primary and base devices via WiFi and the base device communicates with the GSM network via its own GSM antenna, while communicating with the SIM card of the primary device also over WiFi. Alternatively or additionally, the SIM information may be communicated to the wireless router over Bluetooth. From the base station, in one exemplary embodiment, the voice and SMS communications are handled by a circuit switched network (Mobile Switching Center MSC) and data communications are handled by a packet switched network. The communications connect to the wider telephony network via the public switched telephone network (PSTN).

In yet another embodiment, the wireless router (base device) receives communication transmissions from the primary device and communicates these transmissions (voice, SMS, data etc.) via, for example, the Local Area Network (LAN) to which the router is connected. As such, the transmissions reach the public switched telephone network (PSTN) over the IP network (Internet). According to this embodiment, the network communication medium via which the base device communicates the transmissions is a land-based medium. Many other variations and modifications of this transmission method exist.

Bluetooth has a somewhat limited range. WiFi, while having a greater range than Bluetooth, is also limited. Often, a WiFi signal can be transmitted over a longer distance with the use of Repeaters (e.g. large shopping complexes or hospitals etc.). Still, Bluetooth and WiFi are considered to be local wireless communications.

In yet another embodiment, the base device can be in communication with the SIM card of the primary device over the Internet (or a satellite communication and the like). In this manner, the function of the main antenna can be relocated to a much more remote location than the transmission limitations of Bluetooth or WiFi (as described in the previous embodiments).

Displacement of the origination of the call can have additional benefits. For example, a user in a foreign country (e.g. on a business trip or vacation) can connect to a base device in his home country over the internet and initiate local calls from the foreign country. The call will be identified (by the GSM network) as coming from the base device, even though the SIM card is thousands of miles away, in the foreign country. The call will therefore be billed at a local tariff, without incurring roaming fees and the like. The voice and data communications are transferred between the remote, primary device and local, base device over the Internet (e.g. using a WiFi hotspot or a hotel's WiFi service).

### BASE DEVICE IN INACTIVE STATE

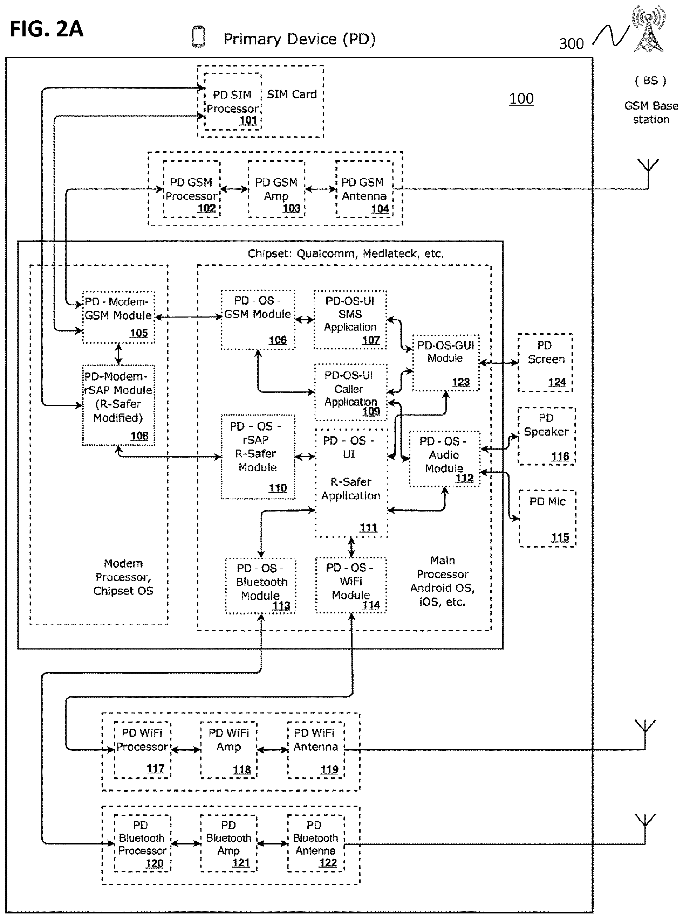

Figure 2A is a block diagram of an exemplary primary device (PD) 100 of the present invention. One common example of a PD, and perhaps most relevant example to the innovative device described herein, is a cell phone or smartphone. In usual operation, the PD is in wireless network communication with the nearest cell tower. The terms "cellular base station", "base transceiver station (BTS)" or simply "Base Station (BS)" are used interchangeably with each other and with the term "cell tower".

In usual operation (i.e. without connecting to the BD) the primary device 100 broadcasts to, and receives signals from, the GSM Base station (BS) 300 via a GSM antenna. In the depicted block diagram, the PD GSM antenna 104 is directly associated with a PD GSM amplifier 103 and a PD GSM processor 102. The group of components is collectively referred to herein as the primary device's: "GSM antenna", "GSM transceiver", "wireless network antenna/ transceiver" or variations thereof.

The GSM base station 300 (which serves as a "gatekeeper" to the cellular network) consistently queries the PD device for the SIM information, at periodic intervals. The GSM antenna is in contact with the SIM card to provide the subscriber identification data. In one embodiment of the process, a PD SIM card processor 101 transmits the SIM card information to a PD modem GSM Module 105. The information is passed the GSM transceiver which sends the information to the GSM BS 300. The GSM transceiver includes a PD GSM Processor 102, a PD GSM amplifier 103 and a PD GSM antenna 104 (for wireless network communication) . The communication between the aforementioned components is bi-directional.

Regular function of the PD device, with regards to voice handling, SMS handling, and data access is known in the art. For the purposes of the present disclosure, these functions are briefly discussed with reference to the components depicted in FIG. 2A. The PD device (when not connected to BD 200) handles voice communications by sending/receiving signals to/from Base Station (BS) 300 via the GSM antenna 102, 103, 104 which communicates with a PD modem GSM module 105 which is in electronic communication with the Operating System (OS) GSM module 106. Incoming calls, active calls and termination of calls are handled by the PD OS User Interface (UI) Caller Application 109. The audio functioning is handled by the Audio Module 112 which interfaces with the microphone 115 and speaker 116. As mentioned above, the communication between the aforementioned components is bi-directional..

SMS functionality is performed on the PD device by sending and receiving signals via the GSM antenna and handled by a PD OS UI SMS Application 107. Sent and received SMS messages are displayed by the OS Graphical User Interface (GUI) Module 123 on the PD screen 124. (According to the depicted embodiment, the SMS message is transmitted by the BS 300 and received at the PD GSM antenna 104. The signal is passed to the GSM Amplifier 103 and from there to the GSM processor 102. The data is then communicated to the modem GSM module 105 and from there it is handed off to the OS GSM module 106 and from there to the OS UI SMS application 107. The SMS is then displayed by the OS GUI module 123 on the PD screen 124.) When an SMS is created on the PD and sent to the BS 300, the aforementioned process is reversed.

Data access (i.e. Internet connection) to Chipset OS of PD 100 is provided by PD Modem GSM Module 105 which is connected to Base Station 300 via the GSM antenna 104. (The modem GSM module 105 sends a data access request which is communicated to the GSM processor102, from there to the GSM amplifier 103 and from there to the GSM antenna 104 which sends the wireless signal to the BS 300. When data is sent from the cellular data network (connected to the Internet), the BS 300 send the data signal which is received by the GSM antenna and the data transfer process is reversed.

There is disclosed herein a mobile application which is installed on PD 100 and referred to herein (and labeled in the diagrams) as "R-Safer Application" or simply PD app 111. PD OS UI R-Safer Application 111 resides on the PD and, in an idle state, waits for a request from Base Device 200 to connect to PD 100 via an auxiliary wireless medium. One exemplary auxiliary wireless medium is Bluetooth. Another medium is WiFi. For example, the BD may communicate with the PD via the Bluetooth medium. In this scenario, the R-Safer Application 111 instructs a PD OS Bluetooth Module 113 to communicate with the BD via a PD Bluetooth antenna 122. PD Bluetooth Antenna 122 is understood to refer generically to a PD Bluetooth Processor 120, a PD Bluetooth Amplifier 121 and a PD Bluetooth antenna 122. When a Bluetooth signal sent from the BD the signal is received at the BT antenna 122 and communicated to the BT amplifier 121 and processed into digital data at the BT processor. The data is then communicated to the OS BT module 113 and from there to the PD app 111. Depending on what the signal included, the PD app will respond accordingly.

In an alternative embodiment, the BD may alternatively communicate with the PD via the WiFi medium. In this scenario, the R-Safer Application 111 instructs a PD OS WiFi Module 114 to communicate with the BD via a PD WiFi antenna 119. PD WiFi Antenna 119 is understood to refer generically to a PD WiFi Processor 117, a PD WiFi Amplifier 118 and a PD WiFi antenna 119. When a WiFi signal is sent from BD 200, WiFi antenna 119 receives the signal and communicates it to WiFi amplifier 118 and from there to WiFi processor 117. At the processor, the signal is processed and communicated to the OS WiFi module 114 and from there to PD app 111. As above, the PD app responds to the content of the signal.

In some embodiments, BD 200 communicates with PD 100 over Bluetooth and WiFi. For example, the BD may fetch the SIM information over BT while transmitting and receiving voice, SMS and data information over WiFi.

### BASE DEVICE (BD) CONNECTION PROCEDURE

According to the precepts of the present innovative method and system the functionality of the GSM antenna is relocated from primary device PD 100 to Base Device (BD) 200 by activating BD 200 and connecting the primary device 100 to the secondary / base device 200. The devices are connected over a wireless communication connection which results in the primary device outputting [significantly] less electromagnetic radiation than when communicating with the PD GSM antenna 104. For the sake of increased clarity, wireless communication between PD 100 and BD 200 has been further distinguished from wireless network communication (i.e. between PD/BD and BS 300) by referring to this type of wireless communication as "auxiliary wireless communication". Auxiliary wireless communication may be effected via Bluetooth, WiFi, NFC, ZigBee etc. or a combination thereof.

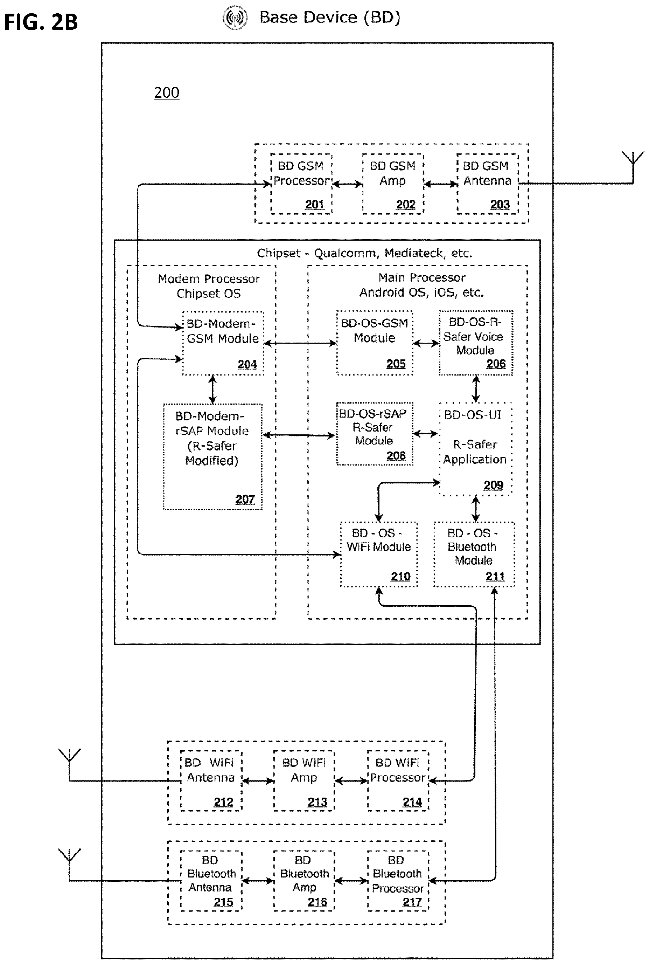

A schematic diagram of the components of Base Device 200 is depicted in Figure 2B. Only components that are germane to the invention are depicted in the Figure. In one preferred embodiment, once the Base Device has been activated, the UI mobile application installed on the PD (e.g. R-Safer Application 111) accepts a connection request from BD 200 and creates a connection or communication channel with a corresponding UI software application BD OS UI R-Safer Application 209 (hereinafter also referred to as BD app 209) via a selected auxiliary wireless medium (e.g. Wi-Fi, Bluetooth, etc.). In other embodiments, the PD may initiate the connection request with the BD (e.g. when the PD R-Safer Application 111 is started).

In an exemplary embodiment, the auxiliary wireless medium is Bluetooth (BT), the PD R-Safer Application (hereinafter also referred to as "PD app") 111 instructs the PD OS BT module 113 to wirelessly connect to BD 200 via the PD BT processor 120, Amplifier 121 and antenna 122. The signal sent via the PD BT antenna 122 is received by a BD BT antenna 215 which is in electronic communication with a BD BT Amplifier 216 and a BD BT processor 217. The BT signal is communicated to a BD OS BT module 211 which is interacts with BD app 209. In this manner, a BT connection or communication channel is created between the PD and the BD. Signals from the BD 200 to PD 100 go in the reverse direction (i.e. communication between the aforementioned components is bi-directional).

In another exemplary embodiment, the auxiliary wireless medium is WiFi, the PD app 111 instructs the PD OS WiFi module 114 to wirelessly connect to BD 200 via the PD WiFi processor 117, amplifier 118 and antenna 119. The WiFi signal sent via PD WiFi antenna 119 is received by a BD WiFi antenna 212 which is in electronic communication with a BD WiFi Amplifier 213 and a BD WiFi processor 214. The WiFi signal is communicated to a BD OS WiFi module 210 which is interacts with BD app 209. In this manner, a WiFi connection or communication channel is created between PD 100 and the BD 200. As mentioned above, the communication channel is bi-directional, with signals from the BD to the PD going in the reverse direction to the process described heretofore.

In preferred embodiments, when the primary device is connected to the base device then the PD GSM antenna (wireless network antenna) 104 is deactivated. Activating or deactivating the GSM antenna includes activation/deactivation of all the associated hardware or at least the components responsible for generating the harmful radiation. In one exemplary embodiment, deactivation of the GSM antenna is effected by the PD app 111, using the following exemplary procedure: The user interface app 111 sends computer-readable instructions to an OS rSAP / R-Safer module 110 which communicates with the PD Modem Processor (passing the instructions from a PD modem rSAP module 108 to a modem GSM module 105) which interfaces between the OS / Main Processor and the antenna / transceiver. The modem GSM module 105 sends instructions to the GSM antenna (to the GSM processor 102 to the GSM amp 103 and from there to the GSM antenna 104), disabling the antenna 104.

There are other scenarios in which the GSM antenna can be disconnected in a similar fashion. One such scenario is in the case of "Wi-Fi calling". WiFi calling allows a cell phone to use a WiFi network to make and receive phone calls, rather than using the traditional mobile network. This is done through the regular telephony and SMS applications (factory defaults) on the mobile device. This is different from standalone applications such as Skype™, Viber™, Whatapp™, etc. which provide communication features over WiFi (this is not the same as "WiFi calling"). When using the aforementioned standalone applications, the GSM antenna is always enabled and activated, even if it is not being used at the time. By contrast, the presently presented "WiFi calling" feature facilitates telephone communications over WiFi, but using the regular telephone functions of the mobile phone, just not the GSM antenna.

With "real" WiFi Calling (i.e. not via applications such as Skype™, Whatsapp™, Viber™, etc.) the user device (e.g. smartphone, etc.) needs to be identified over the network (e.g. Internet). The user device can be identified with the SIM information like on the GSM network or by other means. One example of a unique identifier that is not the SIM information is the phone number. Another example of a unique identifier may be the identifier given by the system that supports the PD and BD apps when the app is installed in the PD device. In preferred embodiments, when calls are made via the WiFi router (base device), the call is routed via a VoIP server of the system. The VoIP server can identify the primary device using any of the exemplary identifiers described above, or different identifiers. Those skilled in the art will recognize that many communications features have not been discussed (or have not been discussed in significant depth), as these are known in the art and there exists a need for brevity. However, these methods and system are considered to be included within the scope of the document.

In another scenario, the GSM antenna is not needed for communicating with the network when the operator communicates with the SIM card via cable, WiFi or any other wireless network. In yet another scenario, the user may decide to disconnect the GSM antenna himself. For example, when a user's smartphone is connected to a WiFi network and the user wants to stop the smartphone's internal, GSM-related activity, such as software updates, transfer of geolocation data, background activity of installed applications and the like. In some cases the user may decide to simply limit the harmful effects of the cell phone antenna on his brain and body. The user is afforded the ability to turn off the antenna using the abovementioned cut-off algorithm or some other similar method.

In other embodiments, one or more of the GSM antenna components 102, 103, 104 is/are not deactivated even after the primary device connects to the secondary / base device. In other embodiments, the PD GSM antenna is not deactivated at all, even though the GSM activity has been relocated to the BD GSM antenna. In some configurations, this embodiment may be less preferred as incoming (wireless network) communications will still cause the GSM antenna 104 to generate electromagnetic radiation before functionality is passed to the Base Device.

Once the auxiliary wireless [bi-directional] channel has been established between PD 100 and BD 200, a BD GSM antenna 203 is activated. In one exemplary embodiment, the BD GSM antenna 203 is activated when computer-readable instructions are sent from BD app 209 to a BD OS rSAP module 208 which is in electronic communication with the BD modem processor. Exemplarily, the OS module is operationally coupled to a corresponding modem module, BD modem rSAP module 207 (in some embodiments the module is specifically modified). The rSAP modem module is in communication to the modem's GSM module, BD modem GSM module 204. The modem GSM module is operationally coupled to a GSM processor 201. The GSM processor is coupled to a GSM amp 202 which is coupled, in turn, with BD GSM antenna 203. When the instructions from the app are received, the BD GSM antenna is activated.

Once the BD GSM antenna is active, base device 200 is queried by cellular network base station 300 for SIM information. In the exemplary configuration depicted in FIG 2A, BS 300 requests the SIM information from the BD modem GSM module 204 via the GSM antenna 203 which is operationally coupled to the GSM amplifier 202 which in turn is operationally coupled to the GSM processor 201 which is in communication with the modem GSM module 204.

In preferred embodiments, the BD does not have a local SIM card. The presently disclosed innovation obviates the need to either physically transfer the SIM card from the PD to the BD or clone the PD's SIM card. Innovatively, base device 200 provides SIM information from the SIM card located in the primary device 100.

In preferred embodiments, the base device 200 accesses the SIM information using a remote SIM Access Profile (rSAP) protocol via the auxiliary wireless communication connection previously established. One preferred but exemplary wireless communication technology is Bluetooth (as discussed above). The rSAP protocol is a known Bluetooth protocol. This profile allows devices such as car phones with built-in GSM transceivers to connect to a SIM card in a Bluetooth enabled phone, thus the car phone itself does not require a separate SIM card. This profile is sometimes referred to as rSAP (remote-SIM-Access-Profile), though that name does not appear in the profile specification published by the Bluetooth SIG.

Similar protocols can be devised for other auxiliary wireless media such as WiFi, NFC, etc. Hereafter the functioning of the auxiliary wireless communication will be detailed with reference to Bluetooth as a specific enabling embodiment, but nonetheless is it made clear that the use of Bluetooth is merely an exemplary embodiment and in no way limiting. For example, the same procedure could be performed over the WiFi medium once the necessary changes have been made. While only BT and WiFi technology have been expressly depicted in the figures, other auxiliary wireless technologies could likewise be employed. Furthermore, more than one technology can be applied at the same time. For example, BT and WiFi protocols can be used at the same time, such as obtaining the SIM information using BT (e.g. using rSAP protocol) while handling voice and data communication via WiFi.

As applied to the exemplary configuration of PD 100 and BD 200 in FIGS 2A and 2B, the BD-modem GSM module 204 (which is tasked with providing BS 300 with the SIM information) connects to the main processor of the BD via the BD-modem rSAP module 207 which is in communication with the BD-OS rSAP module 208 on the main processor. The electronic signals are passed to the UI BD app 209 which then selects the relevant auxiliary wireless medium to connect to the primary device 100. In the described embodiment, the connection is over BT. However, it is made clear that WiFi or any other wireless communication protocol/medium could be used in place of BT. BD app 209 tasks BD-OS BT module 211 to communication over the BD BT antenna 215 (including BT processor 217, BT amplifier 216 and BT antenna 215 of the BD).

The wireless signal is sent by BD BT antenna 215 and subsequently received by the BT antenna 122, 121, 120 of the primary device 100. On the exemplary PD 100 the signal travels to the OS BT module 113 to interface with the UI PD app 111. In one exemplary embodiment, the app fetches the SIM information from a PD SIM processor 101 via the PD modem processor. For example, PD app 111 communicates with OS-rSAP module 110 which in turn communicates with the modem-rSAP module 108 that is in operational communication with SIM processor 101. The SIM information is passed back along the same logic/electronic path, but in the opposite direction, back to the BD-modem-GSM module 204. From there the information is passed via the BD GSM antenna 203 to the cellular base station. The process for substituting the PD GSM antenna 104 with the BD GSM antenna 203 is now complete.

### BASE DEVICE IN ACTIVE AND CONNECTED STATE

A rudimentary explanation of network communication using the GSM antenna of the primary device 100 was discussed above. When the GSM antenna of the base device 200 is substituted for that of the PD, the process is similar, except that the signals and data have to be transferred to and from the primary device after being received from the cellular base station and before being sent off to the cellular base station.

One exemplary process of the aforementioned functionality is discussed hereafter. The Base Device 200 handles voice communications by sending/receiving signals to/from Base Station (BS) 300 via the BD GSM antenna 203. Voice content is sent in a cellular wireless signal from BS 300 and received at BD antenna 203 (antenna 203, to amp 202 to processor 201) and communicated by the BD-modem GSM module 204 to a corresponding BD-OS GSM module 205. From the OS GSM module the electronic impulses which include the voice content are routed to the OS UI BD app 209, e.g. via a BD-OS-R-Safer voice module 206.

The voice content is transferred to, and received from, the Primary Device 100 over the auxiliary wireless connection. The exact steps in the process differ depending on which auxiliary wireless medium is used. When WiFi is used, the voice content is sent from the BD OS WiFi module 210 to the WiFi processor 214, then amp 213 then antenna 212. From the WiFi antenna, the wireless signal is sent to the PD device and received at the PD WiFi antenna 119. The signal is propagated to the PD WiFi amp 118 and from there to the processor 117 and to the OS WiFi module 114 and on to the PD app 111. If BT is used instead of WiFi, then the steps include: BT module 211 to BT processor 217 to amp 216 to antenna 215, signal is wireless wirelessly transmitted and received at PD BT antenna 122, to amp 121 to processor 120 and to PD OS BT module 113 and from there to PD app 111.

The PD app 111 handles all call functionality and the PD-OS Audio Module 112 captures sound from the PD microphone 115 (which is sent to the BD and from there to the BTS) and provides/outputs audio information / data / signals (received at the BD from the BTS and transmitted to the PD) to the PD speaker 116. Voice content is transmitted back to the BD and from there to the BTS along the same path but in the reverse direction.

SMS functionality is performed on the PD device by sending and receiving signals to and from the base device 200. The BD-GSM antenna 203 (antenna components 203, 202, 201) receives the signal from BS 300 and transmits the information via the BD modem to the main processor (BD-modem GSM module 204 communicates with the corresponding BD-OS GSM module 205). The data is then handed off the OS-R-Safer module 206 which interfaces with BD app 209. The data is then transmitted via the auxiliary wireless channel to the PD. The auxiliary wireless communication is described above for the voice communication and is the same for communication of SMS messages.

Once the data arrives at the PD app 111 it is handed off to the PD GUI Module 123 and output to the PD screen 124. In the opposite direction, the GUI Module 123 receives input from the PD touch screen HID 124, and hands the data to the PD app 111 which transmits the data over the auxiliary wireless channel to the BD. The BD sends the SMS message to the cellular base station 300.

Data access (e.g. an Internet connection) is provided to the Chipset OS of Primary Device 100 by PD OS WiFi Module 114 via access point created on Base Device 200. BD access point shares data access provided by BD Modem GSM Module 204 which is connected to Base Station 300.

Exemplarily, using WiFi as the auxiliary wireless communication medium, BS 300 transmits a signal which is received at the BD GSM antenna (201, 202 and) 203. In the depicted embodiment, the signal content is passed to the modem GSM module 204 on the Modem processor chipset and from there to the OS WiFi module 210 on the main processor. The data is then transmitted to the WiFi processor 214, amp 213 and BD WiFi antenna 212 which wireless transmits to the WiFi signal to the primary device. The PD WiFi antenna 119 receives the WiFi signal which propagates through amp 118 to WiFi processor 117 and from there is transferred to the PD OS WiFi Module. The PD app handles the data from there, displaying the information via the OS GUI module 123 on the PD screen 124.

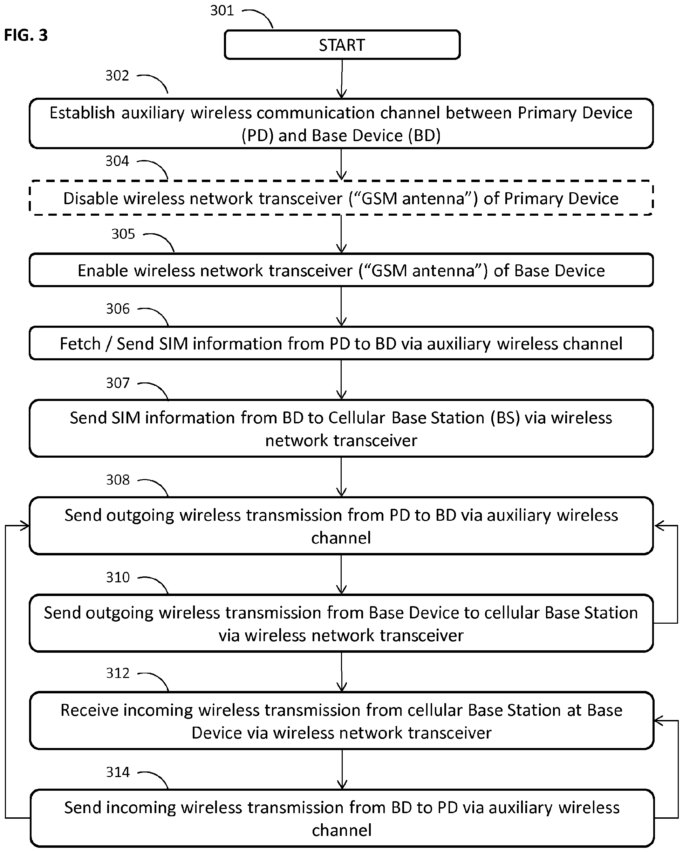

Figure 3 is a flow diagram of the method steps of the invention. The process starts at Step 301. At step 302 the primary device connects to the base device over an auxiliary wireless connection (e.g. Bluetooth or WiFi etc.). In embodiments, the auxiliary wireless connection includes transmissions between an auxiliary wireless transceiver of the primary device and an auxiliary wireless transceiver of the base device.

In some embodiments there is a step 304 at which the wireless network transceiver (e.g. GSM antenna) of the primary device is deactivated after the primary device connects to the secondary device (base device).

If the BD GSM antenna is not yet activated / enabled, then at step 305 the BD GSM antenna 203 is enabled.

At step 306 the subscriber identification module (SIM) information is communicated from a SIM card installed in the primary device to the base device. The information is either transmitted by the primary device or fetched by the base device.

At step 307 the base device provides the SIM information of the primary device to the cellular base station, effectively posing as the primary device. All network communications will now be sent to the base device.

At step 308 outgoing wireless transmissions are sent from the primary device to the base device via the auxiliary wireless connection.

At step 310 the outgoing wireless transmissions are sent from the base device to a network / cellular base station using a wireless network transceiver. If additional outgoing transmissions are sent then repeat from step 308

At step 312 incoming wireless transmissions from the network base station are received at the base device 200.

At step 314 the incoming transmissions are sent to the primary device via the auxiliary wireless connection by the auxiliary wireless communication medium (e.g. WiFi transceiver mechanism). If additional incoming transmissions are received then repeat from step 312. If more outgoing transmissions are sent then repeat from step 308.

In some embodiments of the invention, more than one wireless communication medium is used for auxiliary wireless communication. For example, the Bluetooth communication medium may be used to communicate the SIM information from the primary device to the base device while the WiFi wireless communication medium is employed to effect the wireless transmissions (voice, SMS, data etc.). In some embodiments, the selection of the communication medium may be dynamic, based on predefined parameters. For example, the base device and / or the primary device may monitor frequency strength, available bandwidth, and/or Received Signal Strength Indication (RSSI) values, as well as other parameters, of the available wireless communication media on the devices and select the medium or media that provide the best communication channel and/or the most efficient connection between the devices. The medium that is employed may change between communication sessions and in some embodiments may even change during the same session.

### Test No. 1

A test was performed using an RF (Radio Frequency) Meter, of CORNET Microsystem Inc., Santa Clara, CA, USA. The RF Meter measures the RF field strength in Volts per meter (V/m), and the time-average RF power in uW/m2. That is to say that the RF meter measures the RF that people are exposed to. The RF meter was placed on the face of a Samsung Galaxy S3 smartphone. At the first stage of the test, the base device (R-Safer) was idle and disconnected from the smartphone (primary device). A call was placed to the primary device and RF meter registered between approximately 400 nW and 2.7uW (2700 nW).

The GSM antenna of the primary device was then deactivated and the primary device was connected to the base device over a BT connection. The primary device was phoned again and registered between 0 and approximately 25 nW. That is to say that less than one one-hundredth of the RF that is normally emitted from a smartphone was emitted during the test. While the results speak for themselves, it is noted that the energy / RF output of the smartphone actually depends on the distance from the nearest cell tower and as such, it is possible that the power output in regular use may be higher in cases where the cellular device is further away from the cell tower. However, the power output of the cellular device when connected to the base device will stay approximately the same.

### SOFTWARE - R-SAFER APPLICATION VoIP

Voice over Internet Protocol (Voice over IP, VoIP and IP telephony) is a methodology and group of technologies for the delivery of voice communications and multimedia sessions over Internet Protocol (IP) networks, such as the Internet. The terms Internet telephony, broadband telephony, and broadband phone service specifically refer to the provisioning of communications services (voice, fax, SMS, voice-messaging) over the public Internet, rather than via the public switched telephone network (PSTN).

The steps and principals involved in originating VoIP telephone calls are similar to traditional digital telephony and involve signaling, channel setup, digitization of the analog voice signals, and encoding. Instead of being transmitted over a circuit-switched network, the digital information is packetized, and transmission occurs as IP packets over a packet-switched network. They transport audio streams using special media delivery protocols that encode audio and video with audio codecs, and video codecs. Various codecs exist that optimize the media stream based on application requirements and network bandwidth.

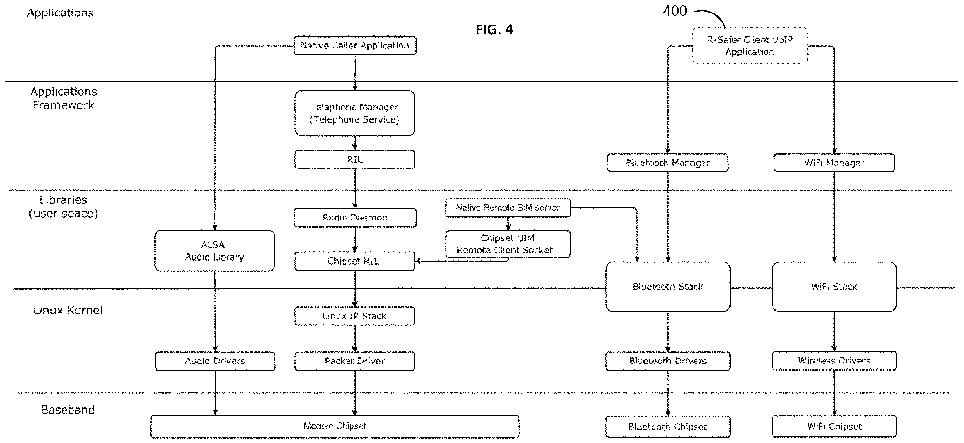

Figure 4 is a schematic depiction of an exemplary software application on the primary device. PD app 111 is a Client VoIP Application that is installed to the Primary Device (PD) in order to connect to the Base Device (BD) and to enable the PD 100 to receive voice calls and SMS from BD 200. In preferred embodiments, the application creates a TCP (Transmission Control Protocol) connection with a Server VoIP Application (on BD 200) and uses the connection for all kinds of communication, such as: enabling/disabling rSAP protocol, starting/ending calls and transferring media packages. TCP provides reliable, ordered, and error-checked delivery of a stream of octets (bytes) between applications running on hosts communicating by an IP network. Major Internet applications such as the World Wide Web, email, remote administration, and file transfer rely on TCP.

The application uses traditional SIP (Session Initiation Protocol) stack for media transfer and it is exemplarily built on top of an open source solution, such as CSIPSimple. The Session Initiation Protocol (SIP) is a communications protocol for signaling, for the purpose of controlling multimedia communication sessions. The most common applications of SIP are in Internet telephony for voice and video calls, private IP telephone systems, as well as instant messaging over Internet Protocol (IP) networks.

The protocol defines the messages that are sent between endpoints, which govern establishment, termination and other essential elements of a call. SIP can be used for creating, modifying and terminating sessions consisting of one or several media streams. SIP is designed to be independent (although not agnostic) of the underlying transport layer, and can be used with UDP, TCP, and SCTP; it can also be secured using TLS over the latter two. It is a text-based protocol, incorporating many elements of the Hypertext Transfer Protocol (HTTP) and the Simple Mail Transfer Protocol (SMTP). CSIPSimple is a Voice over Internet Protocol (VoIP) application for Google Android operating system using the Session Initiation Protocol (SIP). It is open source and free software released under the GNU General Public License.

In preferred embodiments, the application is available from online app stores and can be downloaded and installed.

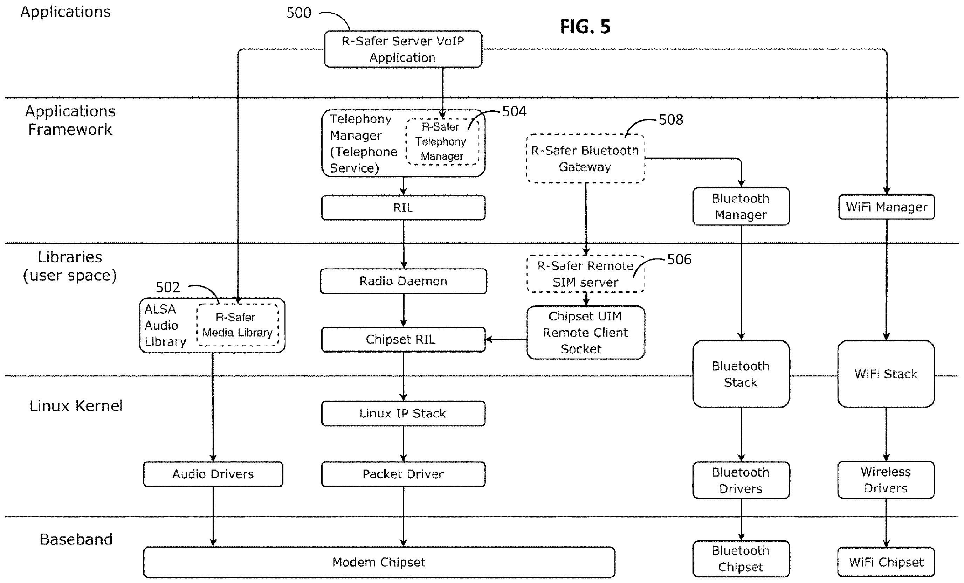

Figure 5 is a schematic depiction of an exemplary software application on the base device. The base device 200 has a corresponding BD app 209. BD app 209 is a Server VoIP Application 500 that directs and controls the rSAP (or equivalent) protocol (enabling/disabling), voice and SMS transport between Primary Device 100 and Base Device 200.

The BD app 209 (the Sever application 500) receives commands / instructions from the Client VoIP Application 400 (PD app 111) and executes the instructions to perform actions such as: enable/disable rSAP (or equivalent) protocol, start/end a call, transfer media packages, etc.

In preferred embodiments, like the Client application 400, the Server application 500 (on the BD) uses traditional SIP stack for media transferring which is exemplarily built on top of an open source solution, such as CSIPSimple. In preferred embodiments, the Server application is preinstalled and provided with Base Device's OS (BD).

An R-Safer Media Library 502 is provided to interface with the R-Safer Server VoIP Application 500 in order to read "incoming" voice stream and write "outgoing" voice stream. An "incoming" voice stream includes media packages which are received from GSM network (e.g. Base Station 300). An "outgoing" voice stream includes media packages that are received from Primary Device (R-Safer Client VoIP Application 400).

Exemplarily, the media library is provided as a part of the ALSA Library which is native to the Android OS-based devices. Since Android OS does not provide reading / writing of the voice stream "out of the box", necessary modifications were made to the ALSA library (which is responsible for voice handling on the level of Linux Kernel) in order to receive the preferred functionality.

Advanced Linux Sound Architecture (ALSA) is a software framework and part of the Linux Kernel that provides an application programming interface (API) for sound card device drivers. ALSA is released under the GNU General Public License (GPL) and the GNU Lesser General Public License (LGPL). Besides the sound device drivers, ALSA bundles a user-space library for application developers who want to use driver features through an interface that is higher-level than the interface provided for direct interaction with the kernel drivers.

The Base Device includes an R-Safer Telephony Manager 504 which provides an interface to Server VoIP Application in order to initiate a voice call and control telephony states such as: start / end call, put a call on hold / resume a call, hide call screen and all call-related notifications on Base Device (BD), etc. The R-Safer Telephony Manager 504 is provided as part of the native Telephony Manager of the device. In exemplary embodiments, the BD has an Android OS. Since Android OS does not provide full control of voice calls "out of the box", necessary modifications were made to the Android Telephony Manager (which is responsible for handling of telephony states) in order to receive the preferred functionality.

The manager also modifies traditional telephony flow on Base Device (BD) and hides / disables all telephony related notifications, UI and ringing tone. This modification to the Base Device is necessary because call UI and call states are handled by R-Safer Client VoIP Application on the Primary Device only.

An R-Safer Remote SIM server 506 controls rSAP communication, sending / receiving / converting rSAP related packages between the SIM card of the Primary Device and BD GSM Module on the Base Device. In preferred embodiments, the server application is compiled with Linux Kern and operates as a "daemon".

An R-Safer Bluetooth Gateway 508 provides Bluetooth access to R-Safer Remote SIM server. The gateway simply retransmits all packages that are received from R-Safer Remote SIM server to the [native] Bluetooth Manager.

While the aforementioned architecture details a preferred embodiment of the software application of the present invention, it is made clear that the embodiment is merely exemplary and in no way limiting. To summarize in general terms, there is provided a mobile device (base device 200) which includes, at least, a wireless network communication transceiver (such as a GSM antenna), at least one auxiliary wireless communication transceiver (e.g. Bluetooth and/or WiFi and/or additional wireless media, not including the GSM antenna), a processing unit (such as the main processor / OS) and a non-transient computer readable medium having stored thereon instructions (i.e. BD software application) executable by the processing unit and configured to cause the processing unit, upon execution of various instructions from the application, to: establish a wireless connection with the primary device using at least one auxiliary wireless communication transceiver (e.g. BT or WiFi or other); fetch subscriber identification module (SIM) information over the wireless connection from a SIM card installed in the primary device; receive outgoing wireless transmissions (voice, SMS, data, etc.) from the primary device via the wireless connection; send the outgoing wireless transmissions to network base station (e.g. BS 300) via the wireless network communication transceiver (e.g. BD GSM antenna); receive incoming wireless transmissions from the network base station via the wireless network communication transceiver; and communicate those incoming wireless transmissions to the primary device via the wireless connection.

The wireless connection between the primary device and the base device can be made by two separate auxiliary wireless transceivers. For example the SIM information may be fetched via a first auxiliary wireless transceiver (e.g. BT) and the incoming and outgoing transmissions may be communicated via a second auxiliary wireless transceiver (e.g. WiFi).

While the invention has been described with respect to a limited number of embodiments, it will be appreciated that many variations, modifications and other applications of the invention may be made. Therefore, the claimed invention as recited in the claims that follow is not limited to the embodiments described herein.

## Claims

1. A method for relocating electromagnetic radiation from a primary device to a base device, the method comprising:
connecting the primary device to the base device over an auxiliary wireless connection;
communicating subscriber identification module (SIM) information from a SIM card installed in the primary device to the base device via said auxiliary wireless connection;
sending outgoing wireless transmissions from the primary device to the base device via said auxiliary wireless connection and sending said outgoing wireless transmissions from the base device to a network base station via a wireless network communication medium; and
receiving incoming wireless transmissions from said network base station at the base device via said wireless network communication medium and communicating said incoming wireless transmissions to the primary device via said auxiliary wireless connection.

2. The method of claim 1, further comprising:
deactivating a wireless network transceiver of the primary device after connecting the primary device to the base device.

3. The method of claim 1, wherein said auxiliary wireless connection includes transmissions between an auxiliary wireless transceiver of the primary device and an auxiliary wireless transceiver of the base device.

4. The method of claim 1, wherein said auxiliary wireless connection is effected by at least one wireless communication medium selected from the group comprising: Bluetooth, Near Field Communication (NFC) and WiFi.

5. The method of claim 4, wherein said SIM information is communicated over a first wireless communication medium and said outgoing and incoming transmissions between said primary device and said base device are communicated over a second wireless communication medium.

6. The method of claim 4, wherein said wireless communication medium is dynamically selected between communication sessions.

7. The method of claim 4, wherein said wireless communication medium is dynamically selected during a communication session.

8. A method for relocating electromagnetic radiation from a primary device to a base device, the method comprising:
connecting the primary device to the base device via corresponding auxiliary wireless communication media on each of said devices;
communicating identification information from the primary device to the base device via said auxiliary wireless communication media;
sending outgoing wireless transmissions from the primary device to the base device via said auxiliary wireless communication media and sending said outgoing wireless transmissions from the base device to a public switched telephone network (PSTN) via a network communication medium; and
receiving incoming transmissions from said PSTN at the base device via said network communication medium and wirelessly communicating said incoming transmissions to the primary device via said auxiliary wireless connection.

9. The method of claim 8, wherein said base device is a wireless router.

10. The method of claim 9, wherein said network communication medium is selected from the group including: a land-based medium and a wireless medium.

11. The method of claim 8, wherein said identification information includes subscriber identification module (SIM) information from a SIM card installed in the primary device.

12. The method of claim 8, wherein said primary device is a mobile cellular communication device.

13. A mobile device, comprising:
a wireless network communication transceiver;
at least one auxiliary wireless communication transceiver;
a processing unit; and
a non-transient computer readable medium having stored thereon instructions executable by said processing unit said instructions being configured to cause said processing unit, upon execution thereof, to:
establish a wireless connection with a primary device using said at least one auxiliary wireless communication transceiver;
fetch subscriber identification module (SIM) information over said wireless connection from a SIM card installed in said primary device;
receive outgoing wireless transmissions from said primary device via said wireless connection;
send said outgoing wireless transmissions to a network base station via said wireless network communication transceiver;
receive incoming wireless transmissions from said network base station via said wireless network communication transceiver; and
communicate said incoming wireless transmissions to said primary device via said wireless connection.

14. The mobile device of claim 13, wherein said at least one auxiliary wireless transceiver includes two auxiliary wireless transceivers.

15. The mobile device of claim 14, wherein said SIM information is fetched via a first auxiliary wireless transceiver and said incoming and outgoing transmissions are communicated via a second auxiliary wireless transceiver.
